(19) Europäisches Patentamt
European Patent Office
Office européen des brevets

(11) Publication number: **0 131 188**
**A1**

(12) # EUROPEAN PATENT APPLICATION

(21) Application number: 84107229.1

(22) Date of filing: 23.06.84

(51) Int. Cl.[4]: C 08 L 69/00
C 08 L 51/04

(30) Priority: 05.07.83 US 510598

(43) Date of publication of application: 16.01.85 Bulletin 85/3

(84) Designated Contracting States: DE FR GB IT NL

(71) Applicant: GENERAL ELECTRIC COMPANY
1 River Road
Schenectady New York 12305(US)

(72) Inventor: Boutni, Omar Mohamed
1232 Oriole Circle
Mt. Vernon Indiana 47620(US)

(72) Inventor: Michel, Rodney Lee
1938 Dalehaven Drive
Evansville Indiana 47715(US)

(74) Representative: Catherine, Alain
GETSCO 42, avenue Montaigne
F-75008 Paris(FR)

(54) **Polycarbonate composition.**

(57) Compositions comprising aromatic polycarbonate resins and graft derivatives of ethylene-propylene terpolymers are compatible over a broad range of amounts. The resultant bends are processable into shaped articles or panels which have a very glossy surface, and substantially retain the mechanical properties of the polycarbonate resin.

EP 0 131 188 A1

TITLE MODIFIED see front page

COMPOSITION

BACKGROUND OF THE INVENTION

The present invention relates to compositions comprising blends of polymer resins. More particularly it relates to blends of aromatic polycarbonate resins and graft derivatives of ethylene-propylene terpolymers.

The aromatic polycarbonate resins are a well known family of materials which are polymeric esters of carbonic acid. The polycarbonate materials are thermoplastic materials characterized by excellent strength, and temperature resistance. This makes them useful for making molded and shaped articles.

Polycarbonate resins have been used alone or in blends with other thermoplastic polymers such as high molecular weight polymeric glycol esters of terephthalic and/or isophthalic acid.

Polycarbonates have also been used in combination with styrene-acrylonitrile-butadiene terpolymers, the so called ABS resins, at least several of which are commercially available (e.g. CYCOLAC®-Borg-Warner Chemicals, Inc.). Mixtures of polycarbonates with ABS graft copolymers are disclosed to have improved impact properties in U.S. Patent No. 4,172,103. However, it is disclosed in U.S. Patent No. 3,130,177 and 3,852,393 that impact resistance of polycarbonate tends to be lowered when it is blended with ABS resins.

Grafted derivatives of ethylene-propylene-diene terpolymers and compositions of such polymers with other resins are known in the art and described in the patent literature. Several of them are commercially available (e.g., ROVEL® - Uniroyal, Inc.). It has been disclosed, for instance, that olefinic copolymers and terpolymers can be grafted with styrene, styrene-acrylonitrile, methyl methacrylate, styrene-methyl

methacrylate, and the like, to provide thermoplastics which can be further blended, e.g., with styrene-acrylonitrile, and molded, extruded or vacuum formed into articles having good tensile and impact strengths. Polymers of this type and methods of their preparation are described in U.S. Patent No. 4,166,081 and U.S. Patent No. 4,202,948, the latter incorporated by reference. Thermoplastic resin blends of polysulfone resins and graft derivatives of ethylene-propylene terpolymers are disclosed in U.S. Patent No. 3,641,207 to have good processability and impact resistance over relatively narrow concentration ranges.

It has now been discovered that aromatic polycarbonates and copolyestercarbonates can be blended with grafted derivatives of ethylene-propylene-diene terpolymers to obtain advantageous properties after molding. Surprisingly, such properties are obtained over a wide range of compositions. Especially noteworthy are high gloss on the surface of articles molded from the compositions and resistance to environmental stress cracking resistance.

## SUMMARY OF THE INVENTION

According to the present invention there are provided thermoplastic compositions suitable for extrusion, molding or shaping by other means into various articles, comprising an admixture of (a) an aromatic polycarbonate or polyestercarbonate resin, and (b) an ethylene-propylene-non-conjugated diene interpolymer grafted with the homopolymer or copolymer of monoethylenically unsaturated monomers as disclosed in U.S. Patent No. 4,202,948, for example, styrene, styrene-acrylonitrile, methyl methacrylate or styrene-methyl methacrylate, halostyrenes, alpha methylstyrene, p-methylstyrene acrylonitrile, methacrylonitrile, acrylic acid, methacrylic acid, the lower alkyl esters

of acrylic and methacrylic acid, styrene maleic anhydride and the like.

The compositions are moldable into parts, pieces and articles which possess a very glossy surface. Mechanical properties such as impact strength are comparable to those of conventional aromatic polycarbonate blends. The compositions are able to tolerate the presence of stress cracking agents, such as gasoline, and/or other additives which normally attack or otherwise have a harmful effect on polycarbonates. In comparison with certain prior art blends, resistance to deterioration by exposure to the elements is superior.

## DESCRIPTION OF THE INVENTION

Preferred for use as component (a) in the compositions of this invention are high molecular weight aromatic polycarbonates of the formula:

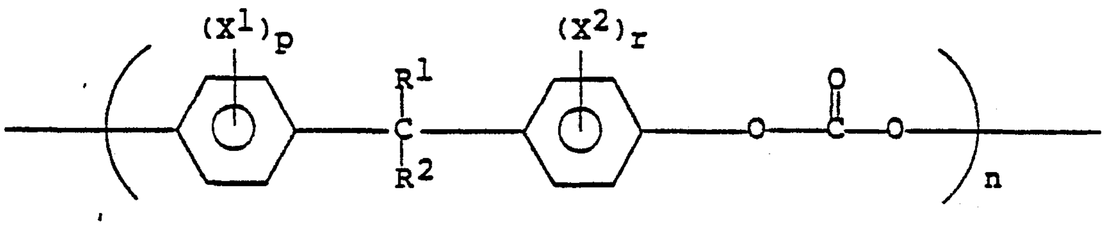

where $R^1$ and $R^2$ are, independently, hydrogen, (lower) alkyl or phenyl; $X^1$ and $X^2$ are, independently (lower) alkyl, (lower) alkenyl or alkaryl; p and r represent the total number of substituents on the rings and are, independently, integers from 1 to 4; and n represents the total number of monomer units in the polymer and is an integer of at least 30. The terms "(lower) alkyl" and "(lower) alkenyl" in this disclosure are intended to mean alkyl and alkenyl having from 1 to 10, preferably 1 to 6, carbon atoms, inclusive. Aryl is preferably phenyl.

Encompassed within the scope of the invention are polycarbonate homopolymers and copolymers having molecular weight (number average) within the range between

about 8,000 and 200,000, or higher, preferably between about 10,000 and 80,000, and an intrinsic viscosity of from about 0.3 to 1.0 deciliters per gram as measured in methylene chloride at 25°C.

The polycarbonate resins are preferably prepared from dihydric phenols, including 2,2-bis(4-hydroxyphenyl)propane (also termed bisphenol A), bis(4-hydroxyphenyl)methane, 2,2-bis(4-hydroxy-3-methylphenyl) propane, 4,4-bis(4-hydroxyphenyl)heptane, 2,2-(3,5,3',-5'-tetrachloro-4,4'-dihydroxypropane, 2,2-(3,5,3'5'-tetrabromo-4,4-dihydroxy-diphenyl)propane, and (3,3'-dichloro-4,4'-dihydroxy-diphenyl)methane. Still other dihydric phenols which are also suitable are disclosed in U.S. Patent Nos. 2,999,835; 3,028,365; 3,334,154; and 4,131,575.

The aromatic polycarbonates can be prepared using known processes, such as, for example, by reacting a dihydric phenol with a carbonate precursor, e.g., phosgene, in accordance with the techniques set forth in the above-cited patents and in U.S. Patent Nos. 4,018,750 and 4,123,436, or by transesterification processes such as those disclosed in U.S. Patent No. 3,153,008.

Also suitable for use as component (a) are aromatic polyestercarbonates derived from a mixture of a dihydric phenol, a dicarboxylic acid or acid chloride and phosgene, as disclosed in U.S. Patent No. 3,169,121 and incorporated by reference as well as branched polycarbonates such as disclosed in U.S. Patent No. 4,001,184 and incorporated by reference.

In addition to the foregoing types, component (a) can be comprised of a blend of two or more aromatic polycarbonates, including any of those which have been described.

Component (b) is a resinous composition of (i)

polymerized alkenyl aromatic units and/or (ii) polymerized acrylic units, in combination with (iii) a rubbery terpolymer comprising copolymerized units of ethylene and propylene and a non-conjugated diolefin. Component (b) preferably is a graft copolymer produced by polymerizing the resin forming alkenyl aromatic monomer and the acrylic monomer in the presence of a rubbery terpolymer of ethylene, propylene and a non-conjugated diolefin.

The non-conjugated dienes used in the preparation of the terpolymer elastomers may include open chain non-conjugated dienes such as 1,4-hexadiene and also cyclic (especially bridged ring) non-conjugated dienes such as dicyclopentadiene, 5-methylene-2-norbornene, 5-ethylidene-2-norbornene and 1,4-cyclooctadiene. The respective weight ratios of ethylene to propylene in the elastomers may range from 40:60 to 75:25. The content of the additional monomer, such as the non-conjugated diene, in the terpolymer can range from about 1% to about 20% by weight. The preferred diene is 5-ethylidene-2-norbornene.

Methods for the preparation of the foregoing rubbery terpolymers are described in U.S. Patent Nos. 2,933,480; 3,000,866; and 3,000,867.

The resin forming monomers useful for copolymerization with the described rubbery copolymers and terpolymers include styrene, α-methylstyrene, p-methylstyrene and other alkyl ring substituted styrenes and acrylics such as acrylonitrile, acrylates and alkacrylates. The ester portion of the acrylate is generally alkyl from one to about eight carbon atoms, inclusive, preferably one to about six carbon atoms, inclusive. The "alk" portion of the "alkacrylate" is alkyl of one to three carbon atoms, inclusive. Examples of acrylate and alkacrylate include ethylacrylate, n-butyl acrylate,

2-ethylhexylacrylate, methylmethacrylate, propylethacrylate and isopentylpropacrylate. Mixtures of styrenics and acrylates can also be employed. Especially preferred are mixtures of styrene and acrylonitrile.

As explained above, the graft copolymers are prepared by polymerizing the resin forming monomers, e.g., styrene and acrylonitrile, in the presence of rubbery terpolymer, e.g., ethylene-propylene-diene. In one procedure, the rubbery terpolymer is dissolved in an inert organic solvent, e.g., benzene, to form a cement, to which is added the desired amount of resin forming monomers and a radical initiator, e.g., peroxide. The mixture is heated to decompose the initiator and to polymerize the monomers. The graft copolymer which results is isolated, e.g., by precipitation with an anti-solvent such as methanol.

The evidence indicates that at least a portion of the resin grafts onto the rubber to form a graft copolymer made up of a rubbery spine or backbone polymer and resinous side chains.

The proportion of resin forming monomers to rubber used in the graft polymerization can vary, for instance, from 1:4 to 4:1, on a weight basis.

The graft copolymers and method of their preparation are described in greater detail by F.X. O'Shea in U.S. Patent No. 3,642,950, and by Albert Fournier, Jr. and Charles Paddock in U.S. Patent No. 4,166,081. Suitable materials are also available commercially from Uniroyal, Inc., Naugatuck, Connecticut under the trade designation ROVEL® resins.

Components (a) and (b) are compatible in widely variant proportions, for example, from 5 to 95 parts by weight of (a) and from 95 to 5 parts by weight of (b), per 100 parts by weight of (a) and (b) combined with the

particular amount being dependent on specific requirements. A preferred ratio is from about 60 to about 95 parts by weight a and about 5 to 40 parts by weight b.

The compositions can also include one or more other ingredients, such as supplementary non-resinous additives conventionally employed with aromatic polycarbonate resins and blends of such resins. Examples include mineral fillers, e.g., clay, talc, mica, etc., reinforcing agents, e.g., fibrous or flaked glass, graphite whiskers, aluminum shavings, wollastonite, titanate whiskers, carbon filaments, etc.; pigments; dyes; processing aids; stabilizers; antioxidants; flame retardants and so forth. These materials can be added in conventional amounts, e.g., from 1 to 50% by weight of the total composition.

Preparation of the compositions may be accomplished by tumble blending components (a), (b), and any other ingredients, extruding the blend and then injection molding the extrudate. The mode of preparation is not essential, however, and other well known procedures for preparing molded polycarbonates can be utilized.

## DESCRIPTION OF THE SPECIFIC EMBODIMENTS

The following examples illustrate the invention:

## EXAMPLES 1-3

This illustrates blends of an aromatic polycarbonate resin and a graft copolymer of styreneacrylonitrile on an ethylene-propylene-5-ethylidene-2-norbornene terpolymer in accordance with the invention.

The compositions were prepared by tumble mixing the ingredients, extruding at 255°C and injection molding at 260°C. The resulting molded test pieces were evaluated for physical properties according to the appropriate ASTM test systems or modifications thereof. The results are shown in Table 1.

## TABLE 1

| | EXAMPLE | | |
|---|---|---|---|
| INGREDIENTS, PARTS BY WEIGHT* | 1 | 2 | 3 |
| Poly(bisphenol A carbonate) (LEXAN® 140, General Electric Co.) Intrinsic viscosity of 0.46-0.49 | 95 | 90 | 80 |
| Ethylene-propylene-diene rubber grafted with styrene-acrylonitrile (ROVEL® 401 - Uniroyal, Inc.) | 5 | 10 | 20 |
| **Properties** | | | |
| Tensile strength at yield, psi | 9,000 | 9,000 | -- |
| Tensile strength at break, psi | 11,000 | 11,700 | -- |
| Tensile elongation, % | 104 | 120 | -- |
| Flexural yield, psi | 14,300 | 14,100 | 13,000 |
| Flexural modulus, psi x $10^5$ | 3.66 | 3.60 | 3.31 |
| Heat delection temperature under load at 264 psi, in °C. | 130 | 127.2 | 122.2 |
| Notched Izod impact, strength, 3.2mm sample, kgf cm/cm | 87 | 87 | 76 |
| Notched Izod impact strength, 6.4mm sample, kgf cm/cm | 27 | 65 | 6.1 |

*All of the blends also contained 0.03 part by weight of a phosphite stabilizer, weight based on polycarbonate present.

EXAMPLES 4-7

This illustrates additional blends of poly(bisphenol A carbonate) and a different ethylene propylene-diene grafted copolymer in accordance with the invention.

The procedures used in Examples 1-3 were repeated to prepare, mold and test the compositions shown below.

## TABLE 2

| INGREDIENTS, PARTS BY WEIGHT* | EXAMPLE 4 | 5 | 6 | 7 |
|---|---|---|---|---|
| Poly(bisphenol A carbonate) (LEXAN® 140, General Electric Co.) Intrinsic viscosity | 95 | 90 | 80 | 70 |
| Ethylene-propylene-diene rubber grafted with styrene-acrylonitrile (ROVEL® 701 - Uniroyal, Inc.) | 5 | 10 | 20 | 30 |
| **Properties** | | | | |
| Tensile strength at yield, psi | 9,000 | 9,000 | 9,000 | 8,500 |
| Tensile strength at break, psi | 11,500 | 11,100 | 9,900 | 9,500 |
| Tensile elongation, % | 109 | 107 | 95 | 99 |
| Flexural yield, psi | 14,500 | 14,000 | 13,600 | 12,800 |
| Flexural modulus, psi x $10^5$ | 3.60 | 3.61 | 3.55 | 3.46 |
| Heat delection temperature under load at 264 psi, in °C. | 127.2 | 128.3 | 124.4 | 117.8 |
| Notched Izod impact, strength, 3.2mm sample, kgf cm/cm | 94 | -- | -- | -- |
| Notched Izod impact strength, 6.4mm sample, kgf cm/cm | 15 | 62 | 59 | 51 |

*All of the blends also contained 0.03 parts by weight of polycarbonate of a phosphite stabilizer.

EXAMPLES 8-11

The following compositions were prepared by premixing the ingredients, extruding at 260°C. and injection molding at 274°C. (65°C. mold temperature), with the results shown.

TABLE 3

| INGREDIENTS, PARTS BY WEIGHT* | EXAMPLE 8 | 9 | 10 | 11* |
|---|---|---|---|---|
| Poly(bisphenol A carbonate) (LEXAN® 140, General Electric Co.) | 10 | 50 | 25 | -- |
| Ethylene-propylene-diene terpolymer grafted with styrene-acrylonitrile (ROVEL® 401 - Uniroyal, Inc.) | 90 | 50 | 75 | 20 |
| Poly(estercarbonate) (LEXAN® 3200, General Electric Co.) based on bisphenol A about 64 mole % ester bonds, ester was 85% terephthalate, 15% isophthalate | -- | -- | -- | 80 |
| **Properties** | | | | |
| Tensile strength at yield, psi | 9,200 | 8,400 | 7,600 | 9,046 |
| Tensile strength at break, psi | 8,800 | 7,500 | 6,300 | -- |
| Tensile elongation, % | 64 | 66 | 59 | 27 |
| Flexural yield, psi | 14,000 | 12,000 | 10,300 | 13,500 |
| Flexural modulus, psi x $10^5$ | 3.4 | 3.3 | 3.1 | 3.1 |
| Heat delection temperature at 264 psi, °C. | 127.8 | 108.9 | 98.8 | 150.9 |
| Notched Izod impact, strength, 3.2mm sample, kgf cm/cm | 81 | 68 | 51 | 33 |
| Notched Izod impact strength, 6.4mm sample, kgf cm/cm | 27 | 57 | 25 | 22 |

*Example 11 was injection molded at 288°C. All of the blends contained 0.03 parts by weight of polycarbonate of a phosphite stabilizer.

The foregoing compositions processed well and the molded articles had a smooth glossy appearance.

All of the above-mentioned patents and/or publications are incorporated herein by reference. Obviously, other modifications and variations of the invention are possible in light of the above disclosure. It is to be understood, therefore, that changes can be made in the particular embodiments shown without departing from the scope of the invention defined in the appended claims.

WHAT IS CLAIMED IS:

1. A thermoplastic resin composition, comprising a blend of (a) an aromatic polycarbonate or polyestercarbonate resin and (b) an ethylene-propylene-non-conjugated diene interpolymer grafted with the homopolymer or copolymer of monoethylenically unsaturated monomers having a phenyl, carbonyl or cyano attached to a vinylic carbon.

2. A composition according to claim 1, in which component (a) is an aromatic polycarbonate of the formula

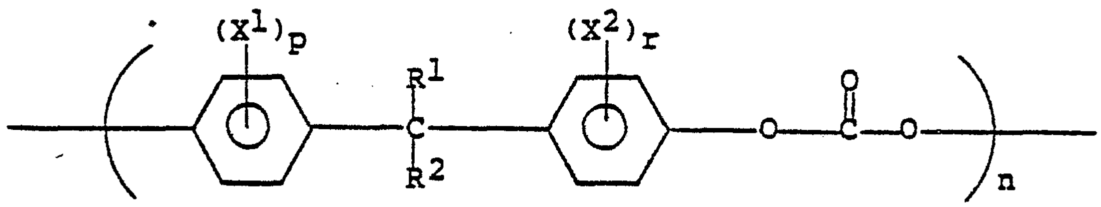

where $R^1$ and $R^2$ are, independently, hydrogen, (lower) alkyl or phenyl; $X^1$ and $X^2$ are, independently (lower) alkyl, (lower) alkenyl or alkaryl; p and r represent the total number of substituents on the rings and are, independently, integers from 1 to 4; and n represents the total number of monomer units in the polymer and is an integer of at least 30.

3. A composition according to claim 1 in which (b) is a graft polymer of styrene-acrylonitrile on an ethylene-propylene-5-ethylidene-2-norbornene chain.

4. A composition according to claim 1, in which component (a) is a poly(bisphenol-A carbonate) resin.

5. A composition according to claim 1, wherein component (a) is present in an amount of from about 5 to about 95 parts by weight and component (b) is present in an amount of from about 95 to 5 parts by weight, per 100 parts by weight of (a) and (b) combined.

6. An article which has been molded from the composition of claim 1.

7. A composition according to claim 1, further containing a reinforcing amount of a reinforcing agent.

European Patent Office

# EUROPEAN SEARCH REPORT

0131188
Application number

EP 84 10 7229

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 172 859 (B.N. EPSTEIN) * Column 4, line 25 - column 8, line 38; column 9, lines 49-56; column 11, lines 15-22 * | 1-7 | C 08 L 69/00<br>C 08 L 51/04 |
| | --- | | |
| X | FR-A-2 371 481 (BAYER AG) * Page 1, line 10 - page 3, line 29; claims 1-3, 13 ; | 1-5,7 | |
| | --- | | |
| P,A | EP-A-0 107 303 (UNIROYAL INC.) * Claim 1 * | 1 | |
| | ----- | | |
| | | | TECHNICAL FIELDS SEARCHED (Int. Cl. 3) |
| | | | C 08 L 51/04<br>C 08 L 69/00 |

The present search report has been drawn up for all claims

| Place of search | Date of completion of the search | Examiner |
|---|---|---|
| BERLIN | 14-09-1984 | IDEZ C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82